# EUROPEAN PATENT APPLICATION

(11) **EP 1 797 840 A1**
(43) Date of publication of application: **20.06.2007**
(21) Application number: 05027662.5
(22) Date of filing: 16.12.2005
(51) Int. Cl.: A61C 8/00

(54) **Immediate-load dental implants**

(71) Applicant: Ziterion GmbH, 97215 Uffenheim (DE)
(72) Inventor: Kahdemann, Steffen, 97215 Uffenheim (DE); Trenkler, Christian, 97215 Uffenheim (DE)
(74) Representative: Zwicker, Jörk

(57) **Abstract**

The present invention relates to a medicinal device made of biocompatible ceramics and/or titanium comprising a threaded part (1), a transgingival part (2) and a prosthetic head (3), wherein the design of the threaded part allows an immediate-load of the dental implant.

## Description

The present invention relates in general to the field of implant dentistry, namely to the design of a medicinal device made of biocompatible ceramics and/or titanium, wherein the medicinal device provides a basis for a crown or superstructure, which is easy to handle by a dentist. More precisely, the present invention relates to a medicinal device comprising a threaded part (1), a transgingival part (2) and a prosthetic head (3), wherein the design of the threaded part allows an immediate-load of the dental implant.

### BACKGROUND OF THE INVENTION

In the last decades artificial bone structures have increasingly been used for implantation in order to replace natural bones lost due to, e.g. degeneration, degradation or injury. This implantations have been performed on bones and tooth roots and have afforded good results in the remedy of defects or the recovery of functions thereof. Dental implants are commonly used to support fixed or removable prosthesis of patients where a patient's natural roots have been lost. Therefore, it is essential to provide an adequate foundation onto which a dentist can rebuild a dentition. As more people want to take advantage of more conservative approaches offered by implant dentistry, e.g., using a single implant rather that cutting down adjacent teeth to support a short span bridge to replace a missing tooth, implant dentistry has gained more and more popularity.

For dental implants it is important to be made of a non-corrosive material, which must be compatible with the surrounding tissue and which does not provoke any immunologic reactions. Usually selected metals and/or selected ceramic materials are used for implants. In the prior art the metallic materials which have mainly been used for preparation of artificial bones or tooth roots included cobalt-chromium alloys, stainless steel, titanium and tantalum. In addition various ceramic materials including alumina and materials comprising mainly carbon have recently been employed.

Metallic materials are excellent in mechanical strength, particularly in impact strength, however, they do lack affinity for living tissue. When a metallic implant is used, metal ions are dissolved out of the implant and are toxic to the bone cells around the implant. In addition, bone formation is abstracted, probably because of the large thermal conductivity of the metallic implant. Among the metallic materials titanium, which is passivated with a thin, inert titanium oxide layer and tantalum have proven to have superior corrosion resistance and to provide a growth surface suitable for attachment of bone forming osteoblasts, which is precondition for stable ingrowth of the art known dental implants and hence have been employed as fixed plates for sculls of fractured parts of bones and implants of jawbones.

Ceramic materials on the other hand show a good affinity to bones. Growing bone tissue, in particular osteoblasts can penetrate into fine pores of the ceramic material, leading to a strong fixation. In addition, there are no adverse reactions between the ceramic material and the tissue. Further, since they are resistant to corrosion or decomposition ceramic materials have excellent durability. However, most ceramic materials possess poor impact strength and are difficult and expensive to manufacture.

A dental implant usually comprises an implant part, intended to be implanted in the bony tissue of the mandible or of the maxilla, and a post or abutment piece, which can be transfixed onto the implant body, so that it stands up above the implant body in order to be able to take a dental prosthesis. A so-called one-part dental implant comprises the implant part and the abutment part in one piece while, in contrast, a two-part dental implant, as the name implies, is made of two pieces, thus the implant part is separable from the abutment part and is connected to the abutment part through, for example, a screw.

The one-part dental implants are inserted in one surgical procedure into the bone and then allowed to attach the bone for a given period of time usually in the range of 3 to 6 months. After this period typically a crown or superstructure is directly attached to the part of the dental implant protruding above the gingival without a need for a further surgical intervention. In contrast thereto when inserting a two-part dental implant into the bone the first part of the dental implant, which does not extend through the gingival is inserted into the bone in a first surgical procedure and after an ingrowth period of typically between 3 and 6 months an abutment part extending above the gingival is attached to the first part in a second surgical procedure.

Thus, the one-part design has certain advantages over the two-part design which include among others and that there is no need for a second surgically intervention. As a consequence of the later the use of a one-part design often results in less bone loss than the use of a two-part design, and thus, in better aesthetic of the soft tissue surrounding the dental implant.

EP 1 570 804A1 describes a two-part dental implant, which comprises an outer body made of ceramic or metal and an inner body made of metal or ceramic, provided that when the outer body is made of metal the inner body is made of ceramic and when the outer body is made of ceramic the inner body is made of metal.

WO 2005/044133 discloses a two-part dental implant, which consists of a base body comprising a threaded part and a post section, onto which a crown is secured. The base body is divided, so that the post elements surrounding the post section, can be removed from the remaining base body comprising the threaded part.

WO 00/32134 describes a two-part implant which is designed so that the areas intended for bone apposition exhibit a scalloped appearance, including both convex, and concave patterns to follow the naturally occurring bone morphology. Thus, the disclosed implants provide attachment possibilities for both bones and soft tissue, thereby effecting both hard- and soft-tissue preservation.

WO 03/045368 A1 discloses a one-part dental implant comprising an anchor part for anchoring the implant in the bone and a mounting part for receiving a prosthetic superstructure. The anchor part and the mounting part are configured in one piece from zirconium oxide-based material. At least sections of the external surface of at least the anchor part are pre-treated using a subtractive removal method or are provided with a coating which supports ossification.

WO 2004/096075 A1 describes a one-part dental implant comprising a base body with a threaded section and a pin for mounting a dental crown, wherein the body base being in one piece. In addition, this one-piece base body is at least largely made from zirconium oxide or a mixture of zirconium oxide and aluminium.

Currently there are different techniques available for producing dental implants made of ceramic materials, which include, for example, forming of a ceramic body, e.g. by injection moulding or isopressing, or grinding out of a densely sintered ceramic blank, e.g. an ceramic blank obtained by hot isostatic pressing (HIP).

A large number of methods are known in the prior art, which allow the production of titanium implants or parts thereof, which include without limitation casting, investment casting and lathing.

Injection moulding has the advantages that a serial production is possible and that almost all designs of a dental implant are possible. However, the design of a prototype injection mould is difficult and/or expensive and, therefore, the variability of this method, i.e. the number of different implant designs which can be produced economically is quite low. In most cases a post-production process is needed, which requires that the material is not densely sintered at this step, which can lead to material defects and thus to a high rejection rate.

Grinding out of a densely sintered HIP cylindrical blank has the advantage that it is very precise due to the CAD/CAM-technique and, thus, a high variability in the design of the threaded part is possible. Since the material is already densely sintered, the rejection rate is very low. However, it is an expensive method and due to the hardness of the material it is not possible to grind into an implant body, such as it is needed to design for example, a conical internal connection. Further, grinding the material can lead to so-called mini-cracks (rifts), which might have an influence on the quality and stability of the implant.

The one-part dental implant designs known from the prior art suffer among others from the fact that they are not suitable to be immediately loaded after implantation. This means, that an undisturbed ingrowth of the implant into the bone is needed before a crown or superstructure can be attached. In the case of one-part dental implants it is not possible to close the tissue over the implant and, accordingly, a part of the implant will protrude through the gingiva. To allow undisturbed ingrowth of the bone tissue into the implant it ism therefore, important that the patient refrains from mechanically disturbing the implant by, for example, touching the protruding part of the implant. Accordingly the compliance of an individual with th instruction of the dentist not to disturb the implant is permanent to the success of the implantation process. However, it is often difficult to maintain compliance of the patient for a period of up to 6 months. Thus, there is a need for a one-part dental implant suitable for an immediate-load of the implant with a crown or superstructure directly after implantation, i.e. an implant which does not require such a long undisturbed ingrowth period.

### SUMMARY OF THE INVENTION

In one embodiment the present invention concerns a dental implant made of biocompatible ceramics and/or titanium having an outer threaded part (1); a transgingival part (2) and a prosthetic head (3), wherein the design of the threaded part (1) allows immediate-load of the dental implant.

In another embodiment the present invention concerns a two-part dental implant made of biocompatible ceramics and/or titanium comprising a dental implant according to the present invention and a crown or superstructure.

In another embodiment the present invention relates to the use of the dental implant according to the present invention for insertion into the manibular or maxillary bone of a patient.

In a further embodiment the present invention concerns the use of a crown or superstructure for connecting to a dental implant according to the present invention.

### DESCRIPTION OF THE PREFERRED EMBODIMENTS OF THE INVENTION

Before the present invention is described in more detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

Several documents are cited throughout the text of this specification. Each of the documents cited herein (including all patents, patent applications, scientific publications, manufacturer's specifications, instructions, etc.), whether supra or infra, are hereby incorporated by reference in their entirety. Nothing herein is to be construed as an admission that the invention is not entitled to antedate such disclosure by virtue of prior invention.

As outlined above there is a need in the prior art to provide a one-part dental implant suitable to be loaded immediately after implantation.

In a first aspect the present invention provides a dental implant made of biocompatible ceramics and/or titanium having an outer threaded part (1), a transgingival part (2) and a prosthetic head (3), wherein the design of the threaded part (1) allows immediate-load of said dental implant.

The term "immediate-load" as used herein, refers to a dental implant according to the present invention, which immediately, e.g. within a period of 0 to 48 hours, i.e. 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, or 48 after implantation of the dental implant, is ready to receive, e.g. a crown or superstructure. The implant is ready to receive, e.g. a crown or superstructure, if the attachment of the crown or superstructure to the implant does not result in a loosening of the implant within a period of 1 week to 6 months after implantation, preferably 1 months to 6 months and more preferably 3 months to 6 months after implantation.

In a preferred embodiment of the dental implant according to the present invention the threaded part can have any art known form. The thread can either be right handed or left handed and can have a wide variety of pitches. Preferably the thread lead has a pitch (α) of between 6 and 18 degree, e.g. 6, 7, 8, 9, 10, 11, 12, 13, 14, 15, 16, 17, or 18 degree, preferably of between 8 and 15 degree and more preferably about 12 degree.

In another preferred embodiment of the threaded part according to the present invention the distance between one turn of the thread to the next turn is preferably of between 1 and 2 mm, more preferably of between 1.2 and 1.8 mm, more preferably of between 1.4 and 1.6 mm and most preferably about 1.5 mm.

In a further preferred embodiment of the threaded part according to the present invention there is a difference between the core drilling (the "inner diameter (i)") and the edge of each turn of the thread (the "outer diameter (o)"), wherein said difference is preferably of between 0.1 and 3.0 mm, preferably 0.5 to 1.5 mm, more preferably about 1 mm. The respective difference depends in part on the respective outer diameter (o). It is preferred that the inner diameter (i) is 10 to 20% smaller than the outer diameter (o).

In a preferred embodiment the thread-profile of said outer threaded part (2) comprises an apical flank and a distal flank. It is further preferred, that the distal flank immediately contacts the apical flank, i.e. without an intervening section. Preferably, the faces of the apical and distal flank are essentially plane over the whole length of the flank, e.g. at least over a length of 80%, 85%, 90%, or 95% of the entire length of the flank. The length of the flank is the length of the surface of the flank between the points, where the flank reaches the inner and outer diameter, respectively. Preferably the flanks comprise a small section at each end, i.e. at the connection point with the next flank, which is not plane but rounded. The length of this section preferably varies between 1% and 15% of the entire length of a given flank. Preferably the acute angle (β) between the apical flank and the longitudinal axis is smaller than the acute angle (γ) between the distal flank and the longitudinal axis.

In one preferred embodiment the apical flank has an acute angle β to the longitudinal axis of between 5 and 20 degree, e.g. 5, 6, 7, 8, 9, 10, 11, 12, 13, 14, 15, 16, 17, 18, 19 or 20 degree, preferably of between 8 and 15 degree and more preferably about 10 degree. In addition, the distal flank has an acute angle γ to the longitudinal axis of between 40 and 70 degree, e.g. 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 degree, preferably of between 45 and 55 degree and more preferably about 50 degree. Thus, a kind of skewback in the bone is observed.

In a preferred embodiment the apical peak of the threaded part is preferably conically formed meeting preferably in a blunt bottom. The cone at the apical peak preferably has a radius of between 1.5 and 2.5 mm, e.g. 1.1, 1.2, 1.3, 1.4, 1.5, 1.6, 1.7, 1.8, 1.9, 2.0, 2.1, 2.2, 2.3, 2.4, or 2.5, preferably 2.0 mm

In one preferred embodiment of the dental implant (1) according to the present invention at least a part of the surface area of said outer threaded part (2) has a micro roughness of between 2 micron and 50 micron, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably between 4 micron and 20 micron to facilitate the ingrowth of osteoblasts and the stable attachment of bone tissue to the implant. It is well known in the art how to measure surface roughness, for example with an alphastep 250 profilometer. The micro roughness provides an excellent contact surface for osteoblasts, which attach to the dental implant and allow faster "osseo-integration", which is a prerequisite for permanent adherence of the implant to the contacting bone surface. Therefore, a suitable micro roughness of the implant surface can contribute to the mechanical interlocking between the bone and the implant. Preferably the surface area having above indicated micro roughness covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part (2).

The required surface roughness can be achieved by a variety of art known methods including without limitation blasting with aluminium oxide after a ceramic or titanium implant has been sintered or the roughness can already be achieved through the design of the mould used for forming the ceramic green body during injection moulding or isopressing or the roughness can be achieved through coating with a biocompatible material e.g. ceramic or any biomaterial which could be suitable to achieve a better implant to bone contact or by surface manipulation through a laser technique. For titanium it is also possible to use techniques including, without limitation etching (chemical and/or electric), blasting, and coating. To obtain the desired surface roughness it is possible to combine two or more of above outlined methods.

In another embodiment of the dental implant according to the present invention the outer threaded part (1) has a diameter and length suitable to be inserted into the manibular or maxillary bone. Ideally all roots of teeth have been removed prior to drilling the hole into which the dental implant is placed. However, it is also possible to drill a hole into a bone still comprising all or parts of a natural root. An outer threaded part (1) is provided which serves the purpose of mechanical stabilizing the dental implant in the bone.

In a preferred embodiment of the dental implant according to the present invention the outer threaded part (1) has a length of between 2 and 20 mm, e.g. 2, 3, 4, 5, 6, 7, 8, 9, 10, 11, 12, 13, 14, 15, 16, 17, 18, 19, or 20 mm, preferably between 8 and 15 mm.

The outer diameter of the threaded part (1) is preferably between 1.5 and 7 mm, e.g. 1.5, 2, 3, 4, 5, 6 or 7 mm, more preferably between 2 and 6 mm, most preferably between 2.5 and 5.5 mm.

It is particularly preferred that the threaded part (1) according to the invention has a length of between 2 and 20 mm and an outer diameter of between 1 and 7 mm. At a length of between 8 and 15 mm an outer diameter of between 2.5 and 5.5 mm is particularly preferred.

The outer threaded part (1) will in most embodiments extend over the entire length of the part of the dental implant inserted into the bone. These threads are preferably present on the cylindrical sections of the dental implant of the present invention, while a tip, which might be attached at the apical end of the dental implant, will preferably not comprise threads. Such a tip can have any shape as long as its diameter does not extend over the diameter of the outer threaded part (1) to which it is attached, i.e. the outer diameter of the outer threaded part (1). Preferably the diameter of the tip does not extend beyond the inside diameter of the outer threaded part (1). The tip preferably has a round, pointed or blunt shape. As it is not always required that the entire part of the threaded implant inserted into the bone is threaded, the dental implant in some embodiments comprises further parts inserted into the bone, which are not threaded. These one or more further parts are preferably located towards the apical end of the dental implant and/or towards the contact region, preferably towards the transgingival part (2). Preferably any further part which is not threaded and is inserted into the bone is also provided with a rough surface as defined above.

In another preferred embodiment according to the present invention the transgingival part (2) is connected to the outer threaded part (1) via a conical junction (4), which preferably does not extend into the bone.

In one preferred embodiment according to the present invention the conical junction (4) preferably has an angle towards the prosthetic head of between 1 and 7 degree, e.g. 1, 2, 3, 4, 5, 6 or 7 degree, preferably of between 2 and 5 degree.

In another preferred embodiment according to the present invention the conical junction (4) preferably has a length of between 0.3 to 3 mm, e.g. 0.3, 1, 2 or 3 mm, preferably of between 0.5 and 1.5 mm, more preferably about 1 mm.

In one preferred embodiment according to the present invention the transgingival part (2) comprises a middle part (5) and a conical junction (6) towards the prosthetic head.

In another preferred embodiment according to the present invention the middle part (5) has a cylindrical shape.

In one preferred embodiment according to the present invention the transgingival part (2) has a length of between 1 to 3 mm, e.g. 1, 2 or 3 mm, preferably of between 1.5 and 2.5 mm.

In a preferred embodiment of the dental implant according to the present invention the transgingival part (2) has preferably a diameter of between 2 to 9 mm, wherein the difference in diameter between the outer diameter of the threaded part (1) is preferably in the range of 0.1 to 2 mm, more preferably 0.3 to 1.0 mm. In one embodiment the diameter of the transgingival part (2) can change over the length of the transgingival part (2) to form, e.g. a conical junction towards the prosthetic head (3).

In one embodiment of the dental implant according to the present invention a surface area of said transgingival part (2) has a micro roughness of less than 2 micron, more preferably of less than 1 micron. Preferably this surface area covers at least 80%, 85%, 90%, or 95% of the transgingival part.

In one preferred embodiment according to the present invention the prosthetic head (3) provides a basis for a crown or superstructure. The term "basis", as used herein, refers to a design suitable to be used to attach a crown or superstructure.

In one embodiment of the dental implant according to the present invention the prosthetic head has a width and or length suitable to avoid a post-processing step. Most prior art implants have a voluminous prosthetic head, which has to be further processed after implantation to allow attachment of, e.g. the crown or superstructure. Post-processing steps, e.g. grinding of the prosthetic head, is often accompanied with an impairment of the prosthetic head and, therefore, avoiding this step provides a further advantage to the dental implants of the present invention. While the teeth between two patients do not markedly vary in their length there is a large variation laterally between similar teeth of two persons. Thus, a post-processing step is always necessary in cases when the dental implant has a width, which given the respective lateral space available will not allow the attachment of, e.g. a crown or superstructure. No post-processing steps are needed, when the width of the prosthetic head is selected in such that is appropriate for the respective tooth space to be closed. Thus, in a preferred embodiment the width of the prosthetic head is within the range of 2.0 to 11.0 mm, more preferably in the range of 2.5 to 8.0 mm, even more preferably in the range of 3.0 to 7.0 mm and most preferably in the range of about 3.5 to about 5.8 mm. In a further preferred embodiment the present invention provides a set of dental implants varying in the width of the prosthetic head. The dentist will then be capable to select one dental implant with a width suitable to attach, e.g. a crown or superstructure, with a size suitable to fill the gap. Such a set of dental implants comprises at least 2 dental implants with prosthetic heads with different width. Preferably, the two width are within above ranges and preferred ranges. A particular preferred said comprises 3, 4, 5, 6, 7, 8, 9, 10, 11, 12, 13, 14, 15, 16, 17, 18, 19 or 20 dental implants each having a prosthetic head with different diameters, preferably equally distributed in the range of 2.0 to 11.0 mm, more preferably in the range of 2.5 to 8.0 mm, even more preferably in the range of 3.0 to 7.0 mm and most preferably in the range of about 3.5 to about 5.8 mm.

In another embodiment of the dental implant according to the present invention the prosthetic head has a length of between 2.5 to 5 mm, e.g. 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0, preferably of between 3 and 4.5 mm, more preferably 4 mm. The use of a length of approximately 4 mm provides that no post-processing steps are needed. Therefore there is no need to grind the prosthetic head (3) after implantation, which could potentially lead to damages of the prosthetic head (3).

In another preferred embodiment according to the present invention the prosthetic head (2) comprises a supragingival part (7) and securing means (8).

In one preferred embodiment according to the present invention the supragingival part (7) has half of the length of the total length of the prosthetic head (3).

In another preferred embodiment according to the present invention the securing means (8) are suitable to be used for the insertion of the dental implant into the bones.

The securing means (8) can have any shape, which, if brought into contact with a corresponding part on the inserting device prevents rotation of the inserting device relative to the dental implant along the longitudinal axis of the dental implant. The securing means (8) is preferably in the form of a multifaced protrusion (10) or indentation (11) located on the top of the prosthetic head (3), preferably a multifaced protrusion (10) located on the top of the prosthetic head (3), most preferably a multifaced protrusion (10) located in the middle on the top of the prosthetic head (3).

In a preferred embodiment of the dental implant according to the present invention said securing means are of polygonal shape (9) preferably said polygonal shape (9) has n-faces, whereas "n" can be any integer, preferably between 1 and 50, e.g. 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces.

In one embodiment of the dental implant according to the present invention the dental implant is made of titanium, preferably pure titanium with a purity of 99.2%, e.g. grade 1 to 4 or titanium alloys, e.g. grade 5 or higher comprising one or more of the following elements Al, Cr, Mo, Sn, Mn, V, Fe, Cu and Si in art known concentration.

In another embodiment of the dental implant according to the present invention the dental implant is made of biocompatible ceramics. In a further embodiment of the dental implant according to the present invention the dental implant is made of titanium and of biocompatible ceramics. Preferably, the threaded part (1) of the dental implant is made of one material, whereas the transgingival part (2) and prosthetic head (3) are made of the other material. More preferably the threaded part (1) of the dental implant is made of biocompatible ceramics, whereas the transgingival part (2) and prosthetic head (3) are made of titanium. Most preferably, the threaded part (1) of the dental implant is made of titanium and the transgingival part (2) and prosthetic head (3) are made of biocompatible ceramics.

If the dental implant is partly or entirely made of titanium or a titanium alloy it is preferred that all surfaces in contact with tissue, bone and the oral cavity are passivated at least by application of a titanium oxide layer. Such passivation can be achieved and directed in various ways including electrochemical passivation or by exposure to increased oxygen concentrations.

In a preferred embodiment in the case of a dental implant according to the present invention made of biocompatible ceramics and titanium, both materials are connected to each other by threads and/or by cementing the two or more parts together. Suitable adhesives are known in the art of dentistry and comprise without limitateion zinc phosphate cements, carboxylate cements, glass ionomer cements, hybrid cements, composite cements, cyanacrylate adhesives, and polyacrylate adhesives.

In one preferred embodiment of the dental implant according to the present invention the biocompatible ceramics comprises a ceramic material selected from the group consisting of zirconium oxide, aluminium oxide, yttrium oxide, hafnium oxide, silicium oxide, magnesium oxide, cer oxide and other metal oxides. The pure or mixed ceramic materials can have various crystal forms including, for example, trigonal, hexangonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9 % of the ceramic composition comprises zirconium oxide, yttrium oxide and hafnium oxide and 0.01 % to 10 % aluminium oxide and other metal oxides, preferably 95 to 99,9 % of the ceramic composition comprises zirconium oxide, yttrium oxide and hafnium oxide and 0.01 to 5 % aluminium oxide and other metal oxides, more preferably 98 to 99,9 % of the ceramic composition comprises zirconium oxide, yttrium oxide and hafnium oxide and 0.01 to 2 % aluminium oxide and other metal oxides, more preferably 99 to 99,9 % of the ceramic composition comprises zirconium oxide, yttrium oxide and hafnium oxide and 0.01 to 9 % aluminium oxide and other metal oxides, e.g. 99.72 % of the ceramic composition will be composed of zirconium oxide, yttrium oxide and hafnium oxide.

In a preferred embodiment the ceramic composition comprises 88 to 95 % by weight of zirconium oxide, 3 to 7 % by weight yttrium oxide, 1 to 4 % by weight of hafnium oxide, 0.1 to 1 % by weight aluminium oxide and 0.01 to 0.5% of other metal oxides, preferably the ceramic composition comprises 90 to 94 % by weight of zirconium oxide, 4 to 6 % by weight yttrium oxide, 1.5 to 2.5 % by weight of hafnium oxide, 0.2 to 0.5 % by weight aluminium oxide and 0.02 % to 0.2 of other metal oxides, more preferably the ceramic composition comprises 92 to 93 % by weight of zirconium oxide, 5 to 6 % by weight yttrium oxide, 2 to 3 % by weight of hafnium oxide, 0.2 to 0.3 % by weight aluminium oxide and 0.02 to 0.05 % of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In one embodiment of the dental implant made of biocompatible ceramics and titanium according to the present invention the threaded part made of either biocompatible ceramics (1) or titanium and the transgingival part (2) and prosthetic head (3) made of either biocompatible ceramics (1) or titanium are connected to each other with an adhesive. In a preferred embodiment the threaded part and the transgingival part (2) and prosthetic head (3) of the dental implant according to the present invention are adhered to each other by any adhesive (also termed cement). A large number of suitable adhesives are known in the art of dentistry suitable to connect two parts of, e.g. an implant. Preferably the adhesive is selected from the group of adhesives comprising of: zinc phosphate cements, carboxylate cements, glass ionomer cements, hybrid cements, composite cements, cyanacrylate adhesives, and polyacrylate adhesives.

In another embodiment of the dental implant according to the present invention said prosthetic head (3) further comprises a crown or superstructure in one piece, whereas the crown or superstructure has been sintered together with the abutment to form one piece.

In a further aspect of the present invention, the object thereof is solved by providing a two-part dental implant made of biocompatible ceramics and/or titanium comprising a dental implant according to the present invention and a crown or superstructure

In another aspect the present invention pertains to the use of the dental implant according to the present invention for insertion into the mandibular or maxillary bone of a patient.

In one preferred embodiment of the present invention, the dental implant according to the present invention is screwed and/or cemented into the mandibular or maxillary bone of a patient.

In a further aspect the present invention concerns the use of a crown or superstructure for connecting to a dental implant according to the present invention.

### BRIEF DESCRIPTION OF THE DRAWINGS

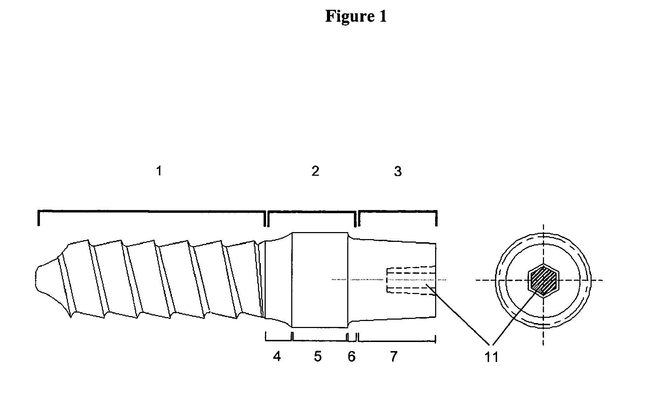

**Figure 1:** Shows a one-part dental implant comprising a outer threaded part (1), a transgingival part (2), and a prosthetic head (3), wherein said prosthetic head comprises securing means (8) in form of a multifaced indentation (11).

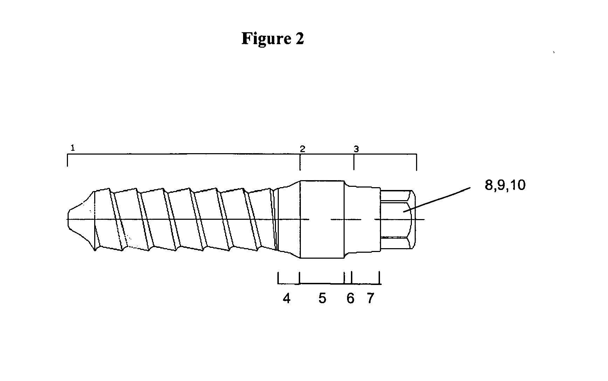

**Figure 2:** Shows a one-part dental implant comprising a outer threaded part (1), a transgingival part (2), and a prosthetic head (3), wherein a conical junction (4) connects the outer threaded part (1) to the middle part (5) of the transginival part (2) and wherein a further conical junction (6) connects the middle part (5) to the prosthetic head (3). In addition, said prosthetic head (3) comprises a supragingival part (7) and securing means (8) in form of a multifaced protrusion (10).

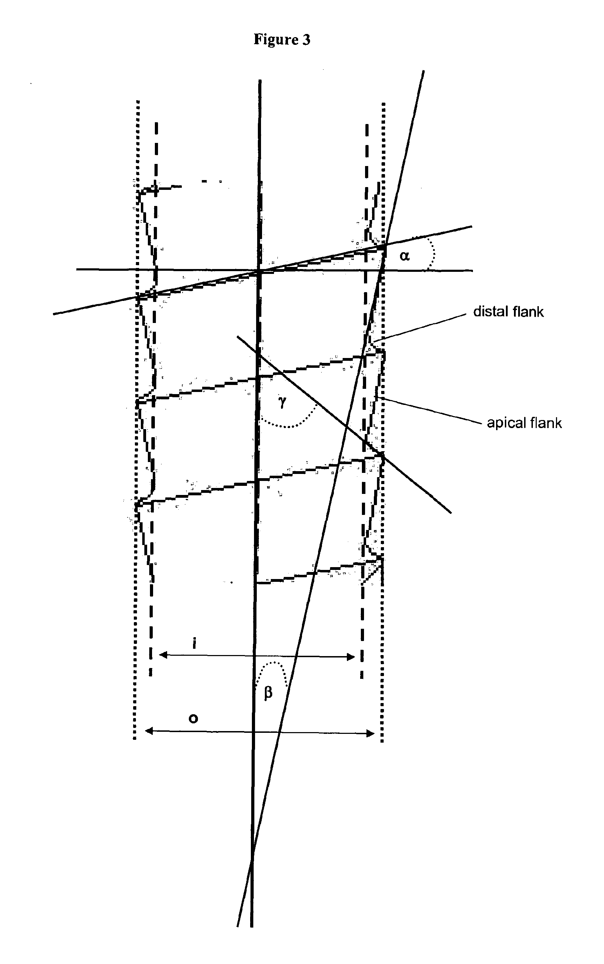

**Figure 3:** Shows a section of the threaded part in one preferred embodiment of the invention, wherein the shaft is tapered towards apical. The angle α depicts the pitch of the threaded part,
   (a) the apical length of the shaft and (b) the distal length of the shaft.

### LISTING OF REFERENCE NUMERALS

- 1: outer threaded part
- 2: transginigival part
- 3: prosthetic head
- 4: conical junction [between threaded part (1) and middle part (5)]
- 5: middle part
- 6: conical junction [between middle part (5 and prosthetic head (3)]
- 7: supragingival part
- 8: securing means
- 9: polygonal shape
- 10: multifaced protrusion of securing means
- 11: multifaced indentation of securing means

## Claims

1. A dental implant made of biocompatible ceramics and/or titanium having an outer threaded part (1), a transgingival part (2) and a prosthetic head (3), wherein the design of said threaded part (1) allows immediate-load of said dental implant.

2. Dental implant according to claim 1, wherein said outer threaded part (1) has a thread lead having a pitch of between 6 and 18 degree.

3. Dental implant according to claims 1 or 2, wherein the thread-profile of said outer threaded part (1) comprises an apical flank and a distal flank, wherein an acute angle (β) between the apical flank and the longitudinal axis is smaller than an acute angle (γ) between the distal flank and the longitudinal axis.

4. Dental implant according to claim 3, wherein the apical flank has an acute angle (β) to the longitudinal axis of between 5 and 20 degree and the distal flank has an acute angle (γ) to the longitudinal axis of between 40 and 70 degree.

5. Dental implant according to any of claims 1 to 4, wherein at least a part of the surface area of said outer threaded part (1) has a micro roughness of between 2 micron and 50 micron.

6. Dental implant according to any of claims 1 to 5, wherein said outer threaded part (1) has a diameter and length suitable to be inserted into the manibular or maxillary bone.

7. Dental implant according to claim 6, wherein said outer threaded part (1) has a length of between 5 and 20 mm.

8. Dental implant according to any of claims 1 to 7, wherein the threaded part (1) is connected to the transgingival part (2) via a conical junction (4).

9. Dental implant according to claim 8, wherein the conical junction (4) has an angle towards the prosthetic head (3) of between 1 and 7 degree.

10. Dental implant according to any of claims 1 to 9, wherein the transgingival part comprises a middle part (5) and a conical junction (6) towards the prosthetic head.

11. Dental implant according to any of claims 10, wherein the transgingival part has a length of between 1 to 3 mm.

12. Dental implant according to any of claims 1 to 11, wherein said prosthetic head (3) provides a basis for a crown or superstructure.

13. Dental implant according to any of claims 1 to 12, wherein said prosthetic head (3) has a width suitable to avoid a post-processing step.

14. Dental implant according to claim 13, wherein said prosthetic head (3) has a length of between 2.5 to 5 mm.

15. Dental implant according to any of claims 1 to 14, wherein said prosthetic head comprises a supragingival part (7) and securing means (8).

16. Dental implant according to claim 15, wherein said supragingival part (7) has a diameter of between 1 and 5 mm.

17. Dental implant according to claim 15, wherein said securing means (8) is of polygonal shape (9).

18. Dental implant according to claim 17, wherein said polygonal shape (9) has 3, 4, 5, 6, 7, 8, 9 or 10 faces.

19. Dental implant according to any of claims 1 to 18, wherein the dental implant is made of titanium.

20. Dental implant according to any of claims 1 to 18, wherein the dental implant is made of biocompatible ceramics.

21. Dental implant according to any of claims 1 to 18, wherein the threaded part (1) of said dental implant is made of titanium and the transgingival part (2) and prosthetic head (3) is made of biocompatible ceramics.

22. Dental implant according to any of claims 1 to 21, wherein the biocompatible ceramics comprises a ceramic material selected from the group consisting of zirconium oxide, aluminium oxide, yttrium oxide, hafnium oxide, silicium oxide, magnesium oxide, and cer oxide.

23. Dental implant according to claims 1 to 22, further comprising a crown or superstructure in one piece.

24. Two-part dental implant made of biocompatible ceramics and/or titanium comprising a dental implant according to claims 1 to 22 and a crown or superstructure.

25. Use of the dental implant according to any one of claims 1 to 23, for inserting into the manibular or maxillary bone of a patient.

26. Use of the dental implant according to claim 25, wherein the dental implant is screwed or cemented into the manibular or maxillary bone of a patient.

27. Use of a crown or superstructure, for connecting to the dental implant according to any of claims 1 to 22.
